# EUROPEAN PATENT APPLICATION

(11) **EP 4 692 517 A1**
(43) Date of publication of application: **11.02.2026**
(21) Application number: 24842025.9
(22) Date of filing: 08.05.2024
(51) Int. Cl.: F01M 13/04, F02D 35/02, F02D 45/00

(54) **CONTROL METHOD FOR OIL-GAS SEPARATOR OPERATING MOTOR**

(30) Priority: 18.07.2023 CN 202310878685
(71) Applicant: Shentong Technology Group Co., Ltd., Ningbo, Zhejiang 315400 (CN)
(72) Inventor: FANG, Lifeng, Ningbo, Zhejiang 315400 (CN); RAO, Congchao, Ningbo, Zhejiang 315400 (CN); MAO, Jinxin, Ningbo, Zhejiang 315400 (CN); GUO, Daxing, Ningbo, Zhejiang 315400 (CN)
(74) Representative: Huang, Liwei
(86) International application number: PCT/CN2024/091635
(87) International publication number: WO 2025/016025

(57) **Abstract**

The inventio discloses a motor operation control method for an oil-gas separator to solve the problem that an existing oil-gas separator control strategy cannot minimize the operating speed under the precondition of satisfying operating requirements. The motor operation control method comprises: acquiring a plurality of groups of actual operating parameters output by a motor in a target operating state, establishing mapping relations according to the parameters, associating the mapping relations, and plotting a relation table; and acquiring a portion of operating parameters of the motor in a current operating state, searching for the mapping relations in the relation table to obtain other parameters, and adjusting corresponding parameter data with the obtained parameters as reference until the motor reaches the target operating state.

## Description

### BACKGROUND OF THE INVENTION

### 1. Technical Field

The invention relates to the field of motor control strategies for oil-gas separators, in particular to a motor operation control method for an oil-gas separator.

### 2. Description of Related Art

With the continuous progress of engine technology and the gradual increase of the operating intensity of engines, the infiltration of oil steam into an air intake system caused by a crankcase ventilation system leads to a high frequency of occurrence of carbon deposit in the engines, so oil-gas separators are widely applied to the engine operating field as effective devices for solving the problem of carbon deposits. The oil-gas separator can keep the whole engine air intake system, including a throttle valve, an intake manifold, an intake passage and an intake valve dry and free of oil to fundamentally solve the problem carbon deposits of the air intake system. Motor speed control strategies for oil-gas separators can realize control of the oil-gas separators. However, existing control strategies control motors to change their speed merely by mechanical control means when the oil-gas separators operate, no reference is available for control, the operating wastage after control cannot be guaranteed, and the part wastage may be increased.

For example, Chinese Patent Publication No.CN114427488A discloses an oil-gas separator, an engine and a control method, wherein the oil-gas separator comprises a filer assembly, a base plate and a first drive assembly, the filter assembly comprises a first baffle plate and a filter element, the first baffle plate and the filter element are arranged on the base plate in a spaced manner, the first baffle is able to rotate with respect to the base plate, and the first drive assembly drives the first baffle plate to rotate to control an included angle between the first baffle plate and the filter element. The oil-gas separator in this scheme can effectively separate water from oil in air. However, the control method physically drives an assembly to control the oil-gas separator to operate by drive setting, and influencing factors in different operating stages of the oil-gas separator fail to be taken into account to some extent, so there is no reference for control, and an optimal control effect cannot be guaranteed.

### BRIEF SUMMARY OF THE INVENTION

### Technical problems

The invention provides a motor operation control method for an oil-gas separator to solve the problem that an existing oil-gas separator control strategy cannot minimize the operating speed under the precondition of satisfying operating requirements. According to the motor operation control method for an oil-gas separator, an actual operating state of an engine is determined according to actual operating parameter signals output by a motor in operation, a corresponding relation table of parameters is set, and the rotational speed of a rotor is changed according to the relation table and different influencing factors in different states to control the pressure in the engine so as to guarantee a normal operating pressure in the engine, such that the operating speed of the oil-gas separator is minimized under the condition of guaranteeing the separation efficiency of the oil-gas separator, thus reducing necessary wastage of parts.

### Technical solution

The invention solves the above technical problem mainly by the following technical solution:

The motor operation control method for an oil-gas separator comprises: acquiring a plurality of groups of actual operating parameters output by a motor in a target operating state, establishing mapping relations according to the parameters, associating the mapping relations, and plotting a relation table; and acquiring a portion of operating parameters of the motor in a current operating state, searching for the mapping relations in the relation table to obtain other parameters, and adjusting corresponding parameter data with the obtained parameters as reference until the motor reaches the target operating state. By establishing the mapping relations between the parameters of the motor in operation, influencing factors can be taken into account more comprehensively when the operating speed is calculated; with reference to the pre-established relation table, the overall control efficiency can be improved, the operating parameters of the motor can be adjusted quickly, and an optimal motor speed control effect can be obtained without affecting the separation efficiency.

Preferably, the actual operating parameters comprise, but not limited to, motor speed, output torque, mean effective pressure and air leakage; the mapping relations between the operating parameters are stablished respectively and influencing factor data are collected to plot the relation table; and the relation table is searched according to any two groups of parameters, and remaining parameters are adjusted to control the current operating state of the motor. According to the preset mapping relations, the relation table is searched to obtain remaining desired parameters according to parameters selected at present, and the obtained remaining parameters are used as target parameters, such that the target values of the parameters can be obtained quickly, thus remarkably improving the control efficiency.

Preferably, with the motor speed and output torque of the motor in the current operating state as query parameters, given air leakage data are obtained according to the corresponding mapping relation and compared with current air leakage data, and an influencing factor corresponding to the air leakage is adjusted according to a comparison result to control an air leakage difference to be in a specified error threshold range. Target air leakage data are obtained according to the corresponding relation between the motor speed, the output torque and the air leakage, and the air leakage is controlled under the precondition that the current speed and output torque of the motor satisfy minimum requirements, such that the speed requirement of the motor is satisfied to the maximum extent.

Preferably, the influencing factor corresponding to the air leakage comprises, but not limited to, a motor temperature difference; a motor temperature before cooling and a current motor temperature are acquired and compared to obtain the motor temperature difference; and a coefficient relation is established based on an engine oil temperature and the oil leakage, a target engine oil temperature is obtained according to a given air leakage and the coefficient relation, and after the oil temperature is adjusted, the motor operates until it is detected that a difference between an current air leakage and the given air leakage is within the error threshold range, such that adjustment is completed. An error threshold is preset, and once the difference between the current air leakage and the given air leakage reaches the error threshold, adjustment will be stopped, such that the adjustment efficiency can be improved, and the situation that the separation efficiency of the oil-gas separator is affected because it takes a long time for each adjustment is avoided; in addition, during temperature control, the temperature is controlled according to the normal operating temperature range of the motor; and if the target temperature exceeds the normal operating temperature of the motor, temperature control will be stopped, such that the operating efficiency of the motor can be effectively guaranteed.

Preferably, with the motor speed and mean effective pressure of the motor in the current operating state as query parameters, a given output torque is obtained according to the corresponding mapping relation and compared with a current output torque, and an influencing factor corresponding to the output torque is adjusted according to a comparison result to control an output torque difference to be within a specified error threshold range. Output torque data are defined and adjusted according to the mapping relation between the motor speed, the mean effective pressure and the output torque, such that a desired operating effect can be obtained by adjusting the output torque, under the precondition guaranteeing a pressure balance in the motor and a specified minimum speed of the motor.

Preferably, the influencing factor corresponding to the output torque comprises, but not limited to, an accelerator pedal signal; a current accelerator pedal signal of an engine is acquired, and an engine torque is determined; a related control module controls corresponding a control valve to rotate according to a flow rate and separation efficiency of the oil-gas separator to change the accelerator pedal signal; and when the difference between the current output torque and the given output torque is within the error threshold range, adjustment is completed. The output torque should be adjusted with reference to the flow rate and separation efficiency of the oil-gas separator, the current output torque can be changed according to the preset target torque by adjusting the angle of the control valve, and once the difference between the current output torque and the given output torque is within the error threshold range, adjustment will be stopped, such that adjustment efficiency is guaranteed.

Preferably, with the air leakage and mean effective pressure of the motor in the current operating state as query parameters, a given motor speed is obtained according to the corresponding mapping relation and compared with a current motor speed, and an influencing factor corresponding to the motor speed is adjusted according to a comparison result to control a speed difference to be within a specified error threshold range. According to the mapping relation between the air leakage, the mean effective pressure and the motor speed, a minimum motor speed in conformity with a target operating effect is determined under the precondition of defining the other two parameters, such that the degree of abrasion of related parts in operation can be greatly reduced, and the operating wastage of devices is reduced.

Preferably, the influencing factor corresponding to the motor speed comprises, but not limited to, a speed level of the motor; if the motor is a stepless motor, the stepless motor is directly adjusted to the given motor speed; or, if the motor is a variable-speed motor, a corresponding speed level of the variable-speed is determined first according to the given motor speed, and then the variable-speed motor is adjusted to a target speed level after analysis, wherein the target level is a lowest level, at which a rated speed is not lower than the target speed, selected from a plurality of levels of the variable-speed motor. In this scheme, both the stepless motor and the speed-variable motor are analyzed, such that the flexibility and applicability of the scheme are improved; in addition, the motor speed is controlled according to the given air leakage and the mean effective pressure, and speed control is stooped when the speed difference reaches a maximum value of the error threshold range, such that the control purpose of allowing the motor to operate at a minimum speed under given conditions is effectively realized, thus minimizing the wastage of the motor.

Preferably, floating threshold ranges are set according to the parameters, speed and mean effective pressure data of the motor in the current operating state are input sequentially, and the remaining parameters obtained by searching in the relation table are compared with current parameters; if differences between the remaining parameters obtained by searching in the relation table and the current parameters are within the corresponding floating threshold ranges, the control process is ended; or, if the differences between the remaining parameters obtained by searching in the relation table and the current parameters are beyond the corresponding floating threshold ranges, the current parameters will be further adjusted until the differences reach the floating threshold ranges. Data obtained after adjustment are continuously detected until all parameters reach the standard, and at this moment, adjustment is ended. In this way, the situation that the control process is ended while one parameter does not reach the target can be effectively prevented, and any two groups of data can be input according to the actual circumstance to check the validity of remaining parameters so as to determine whether further adjustment is needed.

### Beneficial effects

By adopting the motor operation control method for an oil-gas separator provided by the invention, when an oil-gas separator operates, remaining parameters of the oil-gas separator can be adjusted to a minimum range according to given parameters to fulfill an optimal operating state under the condition that target operating conditions are satisfied, such that the device wastage of the motor can be greatly reduced, the service life of the motor is prolonged, the control efficiency is guaranteed, and the operating efficiency of the oil-gas separator will not be affected.

### BRIEF DESCRIPTION OF THE SEVERAL VIEWS OF THE DRAWINGS

FIG. 1 is a flow diagram of a motor operation control method for an oil-gas separator according to the invention.
FIG. 2 is a schematic diagram of the motor operation control method for an oil-gas separator according to the invention.

### DETAILED DESCRIPTION OF THE INVENTION

The technical solutions of the invention are further described specifically in conjunction with embodiments and accompanying drawings.

### Embodiment:

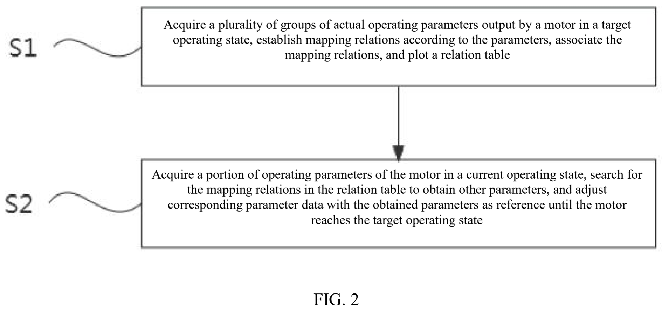

This embodiment provides a motor operation control method for an oil-gas separator. As shown in FIG. 2, the motor operation control method for an oil-gas separator comprises: acquiring a plurality of groups of actual operating parameters output by a motor in a target operating state, establishing mapping relations according to the parameters, associating the mapping relations, and plotting a relation table; and acquiring a portion of operating parameters of the motor in a current operating state, searching the mapping relations in the relation table to obtain other parameters, and adjusting corresponding parameter data with the obtained parameters as reference until the motor reaches the target operating state.

The actual operating parameters comprise, but not limited to, motor speed, output torque, mean effective pressure and air leakage; the mapping relations between the operating parameters are stablished respectively and influencing factor data are collected to plot the relation table, wherein the relation table comprises a mapping relation between the motor speed, the output torque and the air leakage, a mapping relation between the motor speed, the mean effective pressure and the output torque, and a mapping relation between the air leakage, the mean effective pressure and the motor speed; in addition, when the mapping relations are recorded, all surrounding factors that may exert an influence on these parameters are added in additive attributes to form the relation table together with the mapping relations. When an adjustment is initiated, a query operation is performed based on the relation table according to any two groups of parameters, results of remaining parameters in the relation table are obtained and used as target results to adjust the remaining parameters within preset threshold ranges, so as to control the current operating state of the motor. The specific control process is as follows: with the motor speed and output torque of the motor in the current operating state as query parameters, given air leakage data are obtained according to the corresponding mapping relation and compared with current air leakage data, and an influencing factor corresponding to the air leakage is adjusted according to a comparison result to control an air leakage difference to be in a specified error threshold range. With the motor speed and mean effective pressure of the motor in the current operating state as query parameters, a given output torque is obtained according to the corresponding mapping relation and compared with a current output torque, and an influencing factor corresponding to the output torque is adjusted according to a comparison result to control an output torque difference to be within a specified error threshold range. With the air leakage and mean effective pressure of the motor in the current operating state as query parameters, a given motor speed is obtained according to the corresponding mapping relation and compared with a current motor speed, and an influencing factor corresponding to the motor speed is adjusted according to a comparison result to control a speed difference to be within a specified error threshold range. The control process is detailed as follows: the influencing factor corresponding to the air leakage comprises, but not limited to, a motor temperature difference; a motor temperature before cooling and a current motor temperature are acquired and compared to obtain the motor temperature difference; and a coefficient relation is established based on an engine oil temperature and the oil leakage, a target engine oil temperature is obtained according to a given air leakage and the coefficient relation, and after the oil temperature is adjusted, the motor operates until it is detected that a difference between an current air leakage and the given air leakage is within the error threshold range, such that adjustment is completed. The influencing factor corresponding to the output torque comprises, but not limited to, an accelerator pedal signal; a current accelerator pedal signal of an engine is acquired, and an engine torque is determined; a related control module controls corresponding a control valve to rotate according to a flow rate and separation efficiency of the oil-gas separator to change the accelerator pedal signal; and when the difference between the current output torque and the given output torque is within the error threshold range, adjustment is completed. The influencing factor corresponding to the motor speed comprises, but not limited to, a speed level of the motor; if the motor is a stepless motor, the stepless motor is directly adjusted to the given motor speed; or, if the motor is a variable-speed motor, a corresponding speed level of the variable-speed is determined first according to the given motor speed, and then the variable-speed motor is adjusted to a target speed level after analysis, wherein the target level is a lowest level, at which a rated speed is not lower than the target speed, selected from a plurality of levels of the variable-speed motor.

After each adjustment, floating threshold ranges are set according to the parameters, speed and mean effective pressure data of the motor in the current operating state , or any other two sets of parameters are input sequentially, and the remaining parameters obtained by searching in the relation table are compared with current parameters; if differences between the remaining parameters obtained by searching in the relation table and the current parameters are within the corresponding floating threshold ranges, the control process is ended; or, if the differences between the remaining parameters obtained by searching in the relation table and the current parameters are beyond the corresponding floating threshold ranges, the current parameters will be further adjusted until the differences reach the floating threshold ranges. Data obtained after adjustment are continuously detected until all parameters reach the standard, and at this moment, adjustment is ended. In this way, the situation that the control process is ended while one parameter does not reach the target can be effectively prevented, and any two groups of data can be input according to the actual circumstance to check the validity of remaining parameters so as to determine whether further adjustment is needed, such that the situation that a parameter is not detected or adjusted is prevented.

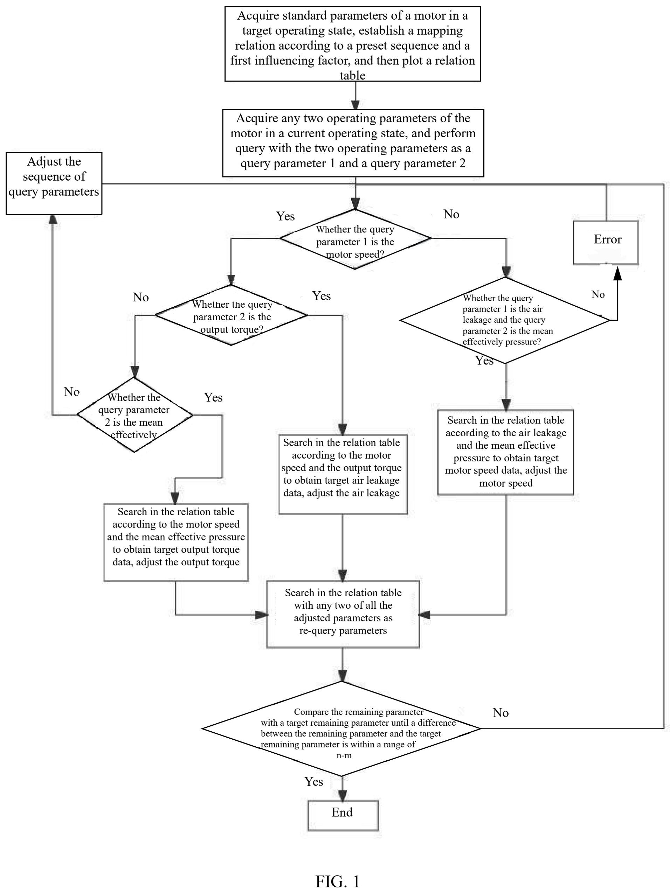

As shown in FIG. 1, the method is sequentially implemented according to the following steps:
Step 1: acquiring standard parameters of a motor in a target operating state, establishing mapping relations according to a preset sequence and a first influencing factor, and then, plotting a relation table;
Step 2: acquiring any two given operating parameters of the motor in a current operating state, and performing query with the two operating parameters as a query parameter 1 and a query parameter 2;
Step 3: if the query parameter 1 is the motor speed, performing Step 4; otherwise, performing Step 5;
Step 4: if the query parameter 2 is the output torque, performing Step 6; if the query parameter 2 is a mean effectively pressure, performing Step 7; otherwise, adjusting the sequence of query parameters, and then returning to Step 3;
Step 5: if the query parameter 1 is the air leakage and the query parameter 2 is the mean effectively pressure, performing Step 8; otherwise, reporting an error;
Step 6: searching in the relation table according to the motor speed and the output torque to obtain target air leakage data, adjusting the air leakage, and then performing Step 9;
Step 7: searching in the relation table according to the motor speed and the mean effective pressure to obtain target output torque data, adjusting the output torque, and then performing Step 9;
Step 8: searching in the relation table according to the air leakage and the mean effective pressure to obtain target motor speed data, adjusting the motor speed, and then performing Step 9; and
Step 9: searching in the relation table with any two of all the adjusted parameters as re-query parameters, and comparing the remaining parameter with a target remaining parameter until a difference between the remaining parameter and the target remaining parameter is within a range of n-m.

The motor operation control method for an oil-gas separator in this embodiment can adjust, when an oil-gas separator operates, remaining parameters of the oil-gas separator to a minimum range according to given parameters to fulfill an optimal operating state under the condition that target operating conditions are satisfied, such that the device wastage of the motor can be greatly reduced, the service life of the motor is prolonged, the control efficiency is guaranteed, and the operating efficiency of the oil-gas separator is prevented from being affected.

It should be understood that the embodiments are merely used for describing the invention and are not intended to limit the scope of the invention. In addition, it should be understood that those skilled in the art can make various modifications or amendments to the invention after reading the above description, and all these equivalents should also fall within the scope by the appended claims of the application.

## Claims

1. A motor operation control method for an oil-gas separator, comprising:
acquiring a plurality of groups of actual operating parameters output by a motor in a target operating state, establishing mapping relations according to the parameters, associating the mapping relations, and plotting a relation table; and
acquiring a part of operating parameters of the motor in a current operating state, searching for the mapping relations in the relation table to obtain other parameters, and
adjusting corresponding parameter data according to the obtained parameters until the motor reaches the target operating state.

2. The motor operation control method for an oil-gas separator according to Claim 1, wherein the actual operating parameters comprise motor speed, output torque, mean effective pressure and air leakage; the mapping relations between the operating parameters are established respectively and influencing factor data are collected to plot the relation table; and the relation table is searched according to any two groups of parameters, and remaining parameters are adjusted to control the current operating state of the motor.

3. The motor operation control method for an oil-gas separator according to Claim 2, further comprising: taking the motor speed and output torque of the motor in the current operating state as query parameters, obtaining given air leakage data according to the corresponding mapping relation, comparing the given air leakage data with current air leakage data, and adjusting an influencing factor corresponding to the air leakage according to a comparison result, so as to control an air leakage difference to be in a specified error threshold range.

4. The motor operation control method for an oil-gas separator according to Claim 3, wherein the influencing factor corresponding to the air leakage comprises a motor temperature difference;
a motor temperature before cooling and a current motor temperature are acquired and compared to obtain the motor temperature difference; and
a coefficient relation is established based on an engine oil temperature and the oil leakage, a target engine oil temperature is obtained according to a given air leakage and the coefficient relation, and
after the oil temperature is adjusted, the motor operates until it is detected that a difference between an current air leakage and the given air leakage is within the error threshold range, such that adjustment is completed.

5. The motor operation control method for an oil-gas separator according to Claim 2, further comprising:
taking the motor speed and mean effective pressure of the motor in the current operating state as query parameters,
obtaining a given output torque according to the corresponding mapping relation,
comparing the given output torque with a current output torque, and
adjusting an influencing factor corresponding to the output torque according to a comparison result, so as to control an output torque difference to be within a specified error threshold range.

6. The motor operation control method for an oil-gas separator according to Claim 5, wherein the influencing factor corresponding to the output torque comprises an accelerator pedal signal;
a current accelerator pedal signal of an engine is acquired, and an engine torque is determined;
a related control module controls corresponding a control valve to rotate according to a flow rate and separation efficiency of the oil-gas separator to change the accelerator pedal signal; and
when the difference between the current output torque and the given output torque is within the error threshold range, adjustment is completed.

7. The motor operation control method for an oil-gas separator according to Claim 2, further comprising:
taking the air leakage and mean effective pressure of the motor in the current operating state as query parameters, obtaining a given motor speed according to the corresponding mapping relation,
comparing the given motor speed with a current motor speed, and
adjusting an influencing factor corresponding to the motor speed according to a comparison result, so as to control a speed difference to be within a specified error threshold range.

8. The motor operation control method for an oil-gas separator according to Claim 7, wherein the influencing factor corresponding to the motor speed comprises a speed level of the motor;
if the motor is a stepless motor, the stepless motor is directly adjusted to the given motor speed;
or,
if the motor is a variable-speed motor, a corresponding speed level of the variable-speed is determined first according to the given motor speed, and then the variable-speed motor is adjusted to a target speed level after analysis, wherein the target level is a lowest level, at which a rated speed is not lower than the target speed, selected from a plurality of levels of the variable-speed motor.

9. The motor operation control method for an oil-gas separator according to Claim 4, 6 or 8, wherein floating threshold ranges are set according to the parameters, speed and mean effective pressure data of the motor in the current operating state are input sequentially, and
the remaining parameters obtained by searching in the relation table are compared with current parameters;
if differences between the remaining parameters obtained by searching in the relation table and the current parameters are within the corresponding floating threshold ranges, the control process is ended;
or,
if the differences between the remaining parameters obtained by searching in the relation table and the current parameters are beyond the corresponding floating threshold ranges, the current parameters are further adjusted until the differences reach the floating threshold ranges.
